# FASCICULE DE BREVET EUROPEEN

(11) **EP 4 573 335 B1**
(45) Date de publication et mention de la délivrance du brevet: **11.03.2026**
(21) Numéro de dépôt: 23809705.9
(22) Date de dépôt: 17.10.2023
(51) Int. Cl.: F28D 15/02

(54) **DISPOSITIF FLEXIBLE DE TRANSFERT DE CHALEUR PAR CIRCULATION D'UN FLUIDE DIPHASIQUE**
FLEXIBLE VORRICHTUNG ZUR WÄRMEÜBERTRAGUNG DURCH ZIRKULATION EINES ZWEIPHASENFLUIDS
FLEXIBLE DEVICE FOR TRANSFERRING HEAT BY CIRCULATING A TWO-PHASE FLUID

(30) Priorité: 20.10.2022 FR 2210747
(43) Date de publication de la demande: 25.06.2025
(73) Titulaire: Airbus Defence and Space SAS, 31402 Toulouse Cedex 4 (FR); Centre National d'Etudes Spatiales, 75001 Paris (FR)
(72) Inventeur: COQUARD, Typhaine, 31402 Toulouse Cedex 4 (FR); FOURGEAUD, Laura, 31402 Toulouse Cedex 4 (FR); SIMON, Coraline, 31402 Toulouse Cedex 4 (FR)
(74) Mandataire: Plasseraud IP
(86) Numéro de dépôt international: PCT/FR2023/051621
(87) Numéro de publication internationale: WO 2024/084165

(56) Documents cités:
- CN-A- 111 829 378
- CN-U- 207 300 019
- US-A1- 2008 099 186

## Description

### Domaine technique

La présente divulgation concerne un dispositif flexible de transfert de chaleur par circulation d'un fluide diphasique pour une utilisation en environnement spatial.

### Technique antérieure

On connaît le brevet IN-2020/21025032 qui enseigne un dispositif de transfert de chaleur présentant une portion flexible. Cette solution technique nécessite toutefois une conception du dispositif de transfert de chaleur spécifique de bout en bout et ne permet pas notamment de réutiliser des évaporateurs ou des condenseurs existants dans les solutions standards, avec une géométrie généralement non modifiable, utilisées dans le domaine spatial. De plus les matériaux utilisés doivent être compatibles avec une utilisation pour le domaine spatial.

On connaît également le brevet US-2008/099186 qui enseigne un conduit adiabatique flexible relié par des interfaces à un évaporateur et un condenseur. Toutefois, les structures des interfaces, de l'évaporateur et du condenseur ne sont pas décrites. Les dimensions du conduit adiabatique flexible semblent également sensibles à son positionnement, ce qui réduit la performance d'une manière générale. Par ailleurs les matériaux utilisés doivent également être compatibles avec une utilisation pour le domaine spatial.

### Résumé

La présente divulgation vient améliorer la situation. En particulier, un but de l'invention est de proposer un dispositif de transfert thermique apte à fonctionner en environnement spatial, qui soit flexible, thermiquement efficace et dont la fabrication est relativement peu coûteuse.

A cet égard, il est décrit un dispositif diphasique de transfert de chaleur selon la revendication 1.

Dans des modes de réalisation, ledit conduit interne flexible de circulation de liquide entouré d'un espace pour la circulation de vapeur est libre par rapport à la gaine flexible.

Selon l'invention, l'ensemble formé par la portion flexible solidaire des deux pièces d'interface est relié, de part et d'autre, à deux caloducs rigides appartenant au dispositif diphasique de transfert de chaleur.

Dans des modes de réalisation, le diamètre capillaire du milieu capillaire de caloduc rigide est inférieur au diamètre capillaire de la portion annulaire de chaque pièce d'interface, lui-même inférieur ou égal au diamètre du conduit interne flexible de circulation de liquide. Dans des modes de réalisation, le dispositif comprend en outre au moins une tige creuse présentant une première extrémité filetée venant se visser en butée en vis-à-vis du canal de circulation de liquide de chaque pièce d'interface et une autre extrémité emmanchée dans ledit conduit interne flexible. Dans des modes de réalisation, chaque pièce d'interface est une pièce métallique monobloc fabriquée par fabrication additive.

Dans des modes de réalisation, chaque pièce d'interface est réalisée en aluminium ou alliage d'aluminium, de même que les caloducs rigides sont réalisés en aluminium ou alliage d'aluminium ou en acier inoxydable.

Dans des modes de réalisation, chaque caloduc rigide comprend une première gaine prolongée sur une partie d'une des pièces d'interface, et la gaine de la portion flexible se prolongeant sur une partie de cette pièce d'interface, les première et deuxième gaines étant serrées par une pièce de serrage contre cette pièce d'interface.

Dans des modes de réalisation, la première gaine vient en butée contre une collerette de la pièce d'interface, la deuxième gaine venant partiellement recouvrir cette collerette.

Selon un autre objet, il est proposé un procédé selon la revendication 9.

Un premier avantage de l'invention réside dans le fait que l'usage d'un ou plusieurs canaux souples permet de rendre flexible le dispositif de transfert de chaleur. En outre la réalisation de la partie flexible est facilitée par le fait que ses conduits vapeurs ne sont pas directement rattachés à la gaine souple extérieure, ce qui permet en outre d'adopter différentes configurations selon les besoins de la mission. Le coût de réalisation de la partie intermédiaire flexible est également réduit.

Un autre avantage de l'invention est qu'elle peut être simplement adaptée pour des évaporateurs et des condenseurs existants. Il suffit en effet de dimensionner, en conséquence, les pièces d'interface et les sections de canaux pour le liquide.

Avantageusement encore, le montage selon l'invention permet de garantir un diamètre capillaire croissant par un montage simple à mettre en œuvre. Notamment le vissage en butée peut laisser un jeu d'épaisseur inférieure au diamètre capillaire et l'insertion élastique dans le canal de liquide peu faire apparaître une déformation de diamètre capillaire également négligeable. La collerette permet en outre un processus de montage fiable et facilité. Le diamètre capillaire croissant vers les canaux souples permet également que ceux-ci présentent un diamètre interne relativement important, c'est-à-dire de l'ordre du millimètre, ce qui permet de limiter les pertes de charge.

Un autre avantage est que la pièce d'interface peut être réalisée aisément en aluminium ou en acier inoxydable par un processus de fabrication du type ALM.

### Brève description des dessins

D'autres caractéristiques, détails et avantages apparaîtront à la lecture de la description détaillée ci-après, et à l'analyse des dessins annexés, sur lesquels :
**Fig. 1**

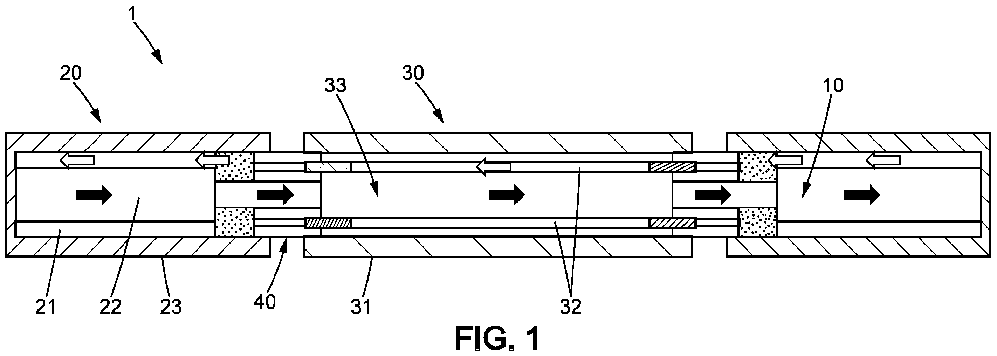

   [Fig. 1] représente schématiquement le fonctionnement d'un dispositif diphasique de transfert de chaleur selon un mode de réalisation.
**Fig. 2a**

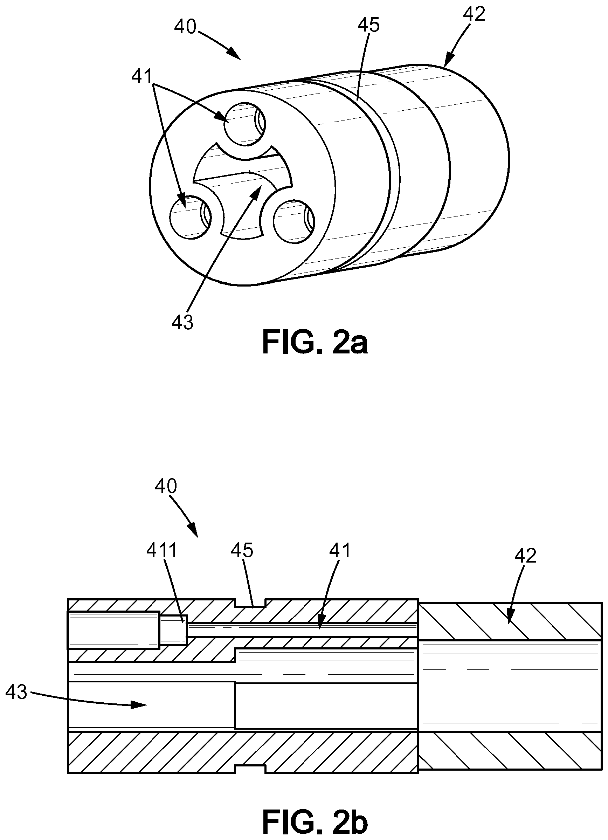

   [Fig. 2a] représente un exemple d'une pièce d'interface.
**Fig. 2b**
   [Fig. 2b] représente une coupe longitudinale d'un exemple de pièce d'interface.
**Fig. 3**

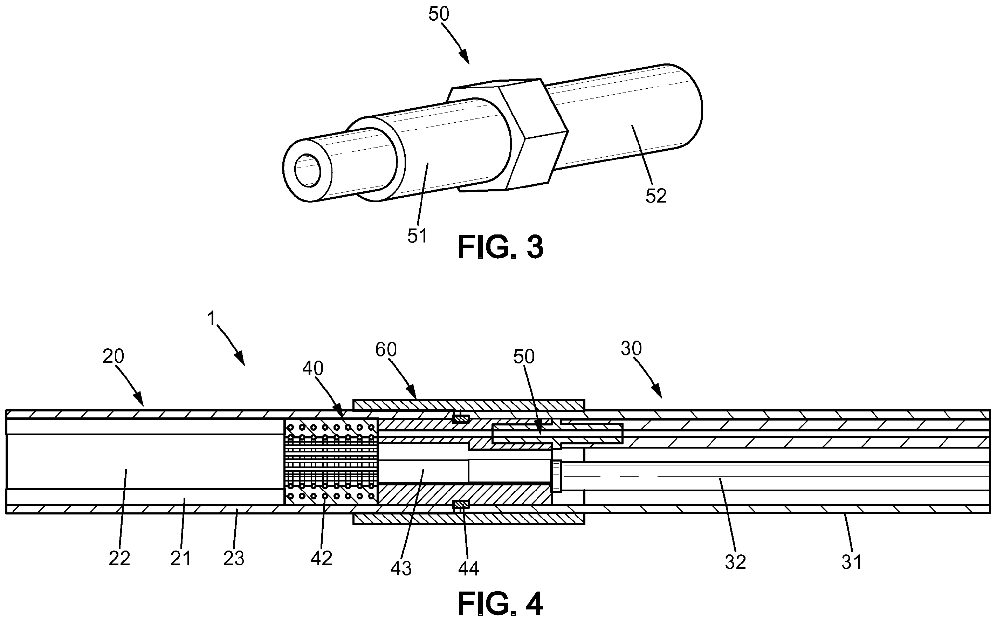

   [Fig. 3] représente un exemple de tige pour l'assemblage d'un tuyau flexible à une pièce d'interface
**Fig. 4**
   [Fig. 4] représente schématiquement une vue partielle d'un dispositif diphasique de transfert de chaleur selon un mode de réalisation.
**Fig. 5a ; Fig. 5b** **;** **Fig. 5c; Fig. 5d**

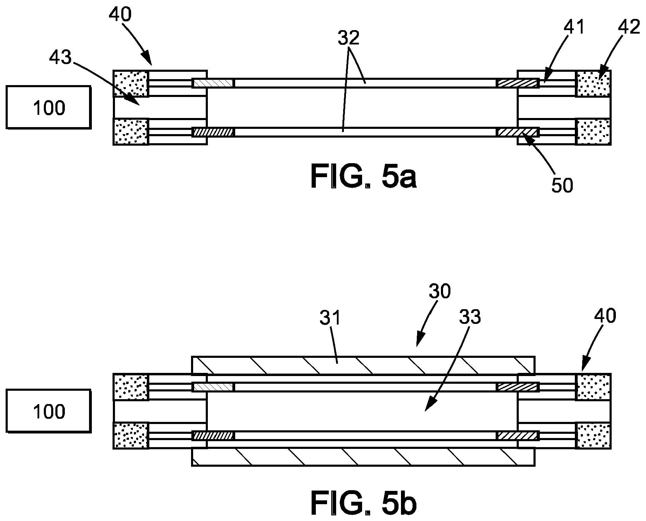

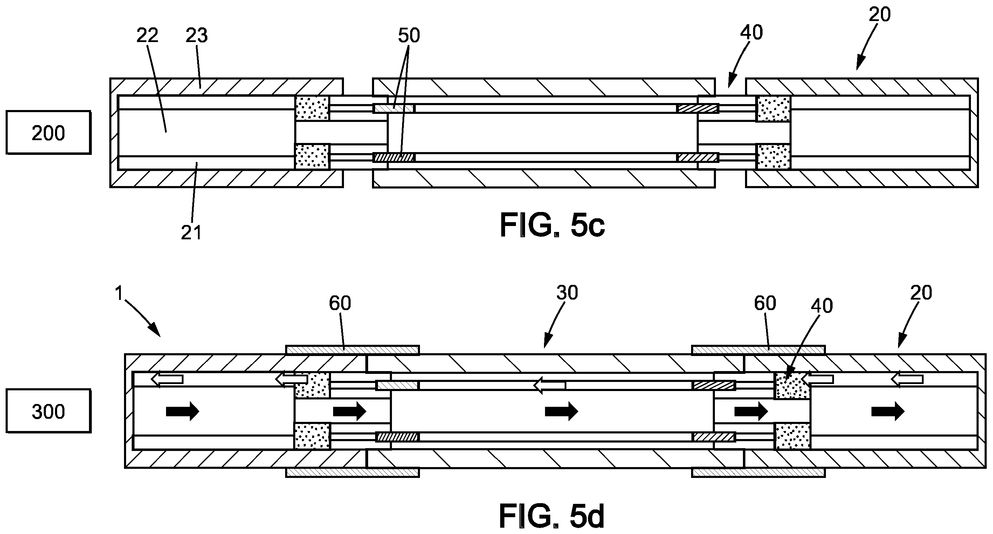

   [Fig. 5a] ; [Fig.5b] ; [Fig.5c] ; [Fig. 5d] représentent schématiquement les principales étapes d'un procédé d'assemblage d'un dispositif diphasique de transfert de chaleur.

### Description des modes de réalisation

Il est maintenant fait référence à la figure 1, qui représente schématiquement un dispositif 1 diphasique de transfert de chaleur apte à fonctionner en environnement spatial. Deux portions d'échange thermique respectivement de vaporisation et de condensation sont par exemple reliées entre elles par le dispositif 1 diphasique de transfert de chaleur. Le dispositif 1 comprend une cavité 10 fermée de façon étanche, contenant un fluide diphasique à saturation à l'état d'équilibre liquide-vapeur, c'est-à-dire comprenant une phase vapeur et une phase liquide. Une partie du dispositif 1 est en contact thermique avec une source dite chaude, par exemple un équipement à refroidir, et une autre partie est en contact thermique avec une source dite froide, par exemple l'espace. Le fluide diphasique circule au sein de la cavité, la partie liquide du fluide s'évaporant au voisinage de la source de chaleur, la vapeur obtenue se déplaçant vers la source froide où elle est condensée, et où elle restitue ainsi l'énergie thermique emmagasinée à la source froide.

Pour permettre la circulation de la phase liquide au sein de la cavité, la cavité comprend un circuit de circulation de liquide qui est conformé pour permettre un écoulement du liquide par capillarité. La cavité comprend par ailleurs un circuit de circulation de vapeur comprenant un ou plusieurs canaux de circulation de vapeur, le circuit de liquide et le circuit de vapeur étant en communication de fluide pour permettre la circulation du fluide diphasique et ses changements d'états.

Le fluide caloporteur contenu dans la cavité peut par exemple être de l'eau, de l'ammoniac, du méthane, de l'éthane, du propylène, du méthanol ou de l'éthanol à l'état d'équilibre liquide-gaz.

Le dispositif 1 comprend par exemple au moins deux portions d'échange thermique, respectivement une portion d'échange thermique dite de vaporisation, cette portion étant en contact thermique avec la source chaude, et une portion d'échange thermique dite de condensation, cette portion étant en contact thermique avec la source froide. Les portions d'échange thermique sont reliées entre elles par un circuit de liquide et un circuit de vapeur du dispositif 1 de transfert. Le dispositif 1 de transfert comprend des caloducs rigides. Chacun de ces caloducs rigides comprend par exemple un milieu capillaire 21 pour la circulation de liquide, ce milieu capillaire faisant partie du circuit de liquide de la cavité, et au moins une rainure 22 de circulation de vapeur, faisant partie du circuit de circulation de vapeur de la cavité. Par exemple, chaque caloduc rigide peut comprendre une rainure 22 centrale entourée du milieu capillaire 21. Les caloducs rigides 20 sont réalisés en un matériau thermiquement conducteur, par exemple en métal, par exemple en aluminium ou alliage d'aluminium, ou encore en acier inoxydable.

A cet égard, le dispositif 1 comprend une portion flexible 30 et deux pièces d'interface 40, chaque pièce d'interface étant conformée pour réaliser une interface mécanique et fluidique entre la portion flexible et chaque caloduc rigide. Les deux caloducs rigides 20 sont donc reliés entre eux successivement par une pièce d'interface 40, la portion flexible 30 et une autre pièce d'interface 40.

La portion flexible 30 comprend une gaine flexible étanche 31 à l'intérieur de laquelle s'étend au moins un conduit interne flexible de circulation de liquide 32, entouré d'un espace 33 pour la circulation de vapeur. Le ou les conduits flexibles de circulation de liquide sont des conduits étanches souples, réalisés par exemple en PTFE. La gaine flexible 31 peut par exemple être une gaine en métal tressé. Alternativement, la gaine peut être formée en métal ondulé. Selon une autre variante, la gaine flexible 31 peut comprendre une gaine en métal ondulé interne, entourée d'un fourreau externe en métal tressé. Le métal utilisé peut par exemple être de l'acier inoxydable.

En référence aux figures 2a et 2b, chaque pièce d'interface 40 comprend au moins un canal de circulation de liquide 41 destiné à être en communication de liquide avec un conduit interne flexible 32 une fois l'assemblage du dispositif 1 réalisé, chaque canal de circulation de liquide 41 étant prolongé par une portion capillaire 42 permettant de réaliser l'interface avec le milieu capillaire 21 d'un caloduc rigide 20. Chaque pièce d'interface permet ainsi d'assurer la continuité du circuit liquide.

Chaque pièce d'interface 40 comprend en outre un conduit interne 43 de circulation de vapeur qui, une fois le dispositif assemblé, est en communication fluidique avec la rainure 22 de circulation de vapeur d'un caloduc rigide 20 et avec l'espace 33 de circulation de vapeur de la portion flexible 30 de manière à assurer la continuité du circuit de circulation de vapeur.

Dans des modes de réalisation, la portion flexible 30 comprend plusieurs conduits internes flexibles de circulation de liquide 32 et chaque pièce d'interface comprend autant de canaux 41 de circulation de liquide. Chaque conduit interne flexible de circulation de liquide 32 entouré d'un espace pour la circulation de vapeur 33 est libre par rapport à la gaine. C'est-à-dire que les canaux de circulation de liquide ne sont pas directement liés à la gaine. Les canaux de circulation de liquide peuvent être répartis à intervalle angulaire constant à la circonférence du conduit interne 43 de circulation de vapeur. Dans l'exemple représenté sur la figure 2a, chaque pièce d'interface comprend trois canaux 41 de circulation de liquide et la portion flexible comprend trois conduits 42.

En référence à la figure 2b, qui représente une vue en coupe longitudinale d'une pièce d'interface 40, la pièce 40 comprend deux sections consécutives où la première section comprend un ou plusieurs canaux 41 de circulation de liquide et une section du conduit interne 43 de circulation de vapeur, et la deuxième section comprend une portion capillaire 42 circonférentielle s'étendant autour d'une section du conduit interne 43 de circulation de vapeur. Dans des modes de réalisation, la dimension capillaire caractéristique du circuit liquide s'étendant de la portion flexible 30 à un caloduc rigide 20 est croissante depuis le caloduc rigide 20 jusqu'à la portion flexible 30. La dimension capillaire caractéristique peut correspondre, pour des milieux capillaires de type treillis, au diamètre de la plus grosse particule sphérique pouvant passer au travers et, pour des milieux capillaires de types rainures ou pour des tubes, au diamètre hydraulique d'une rainure ou d'un tube. Ainsi, la dimension capillaire du milieu capillaire 21 du caloduc rigide est inférieure ou égale à la dimension capillaire de la portion capillaire 42 d'une pièce d'interface, qui est elle-même inférieure ou égale au diamètre du canal interne 41 d'une pièce d'interface, qui est elle-même inférieure ou égale au diamètre d'un conduit flexible 32 de la portion flexible 30. Selon un exemple non limitatif, la dimension capillaire du milieu capillaire 21 peut être inférieure à 1 mm, par exemple comprise entre 0,5 et 1 mm, et le diamètre interne d'un conduit flexible 32 peut être compris entre 1 et 2 mm, par exemple égal à 1,5 mm.

Chaque pièce d'interface 40 peut être une pièce métallique monobloc réalisée par fabrication additive. Elle peut être réalisée en aluminium ou alliage d'aluminium ou encore en acier inoxydable.

Dans le cas où l'une de la pièce d'interface 40 et du caloduc rigide 20 est réalisée en acier inoxydable et l'autre pièce est en aluminium ou alliage d'aluminium, la pièce réalisée en aluminium ou alliage d'aluminium peut avantageusement être recouverte d'un revêtement permettant d'empêcher le contact direct entre l'acier inoxydable et l'aluminium pouvant entrainer une corrosion galvanique. Ce revêtement peut par exemple, mais non limitativement, être en PTFE ou un dépôt d'alumine.

En référence aux figures 1, 3 et 4, pour l'assemblage de la portion flexible 30 aux pièces d'interface 40, le dispositif 1 comprend en outre des tiges 50 présentant chacune une première extrémité 51 portant un filetage externe, pour être vissée à l'intérieur du canal 41 de circulation de liquide d'une pièce interface, ledit canal présentant également un filetage à son extrémité, et une deuxième extrémité 52 conformée pour pouvoir être emmanchée dans une extrémité d'un conduit flexible 32. Chaque tige est creuse, c'est-à-dire qu'elle comprend un canal interne débouchant aux deux extrémités, de sorte que le liquide contenu dans le conduit flexible 32 puisse circuler jusqu'au canal 41 d'une pièce d'interface en passant par l'intérieur d'une tige 50. De retour à la figure 2b, chaque canal 41 de circulation de liquide comprend à cet égard une section d'extrémité filetée 410, cette section pouvant présenter un diamètre supérieur au diamètre du reste du canal, le canal formant ainsi un épaulement 411 contre lequel la tige 50 peut être vissée en butée, de façon à assurer une bonne continuité capillaire. Le diamètre du reste du canal, c'est-à-dire de la portion du canal 41 s'étendant entre l'épaulement et la portion capillaire 42, peut correspondre au diamètre interne de la tige 50. Plus généralement, le diamètre interne des tiges 50 est compris entre le diamètre interne du canal 41 de circulation de liquide d'une pièce d'interface et le diamètre interne du conduit flexible 32.

Chaque caloduc rigide 20 comprend en outre une gaine 23 prolongée par rapport au milieu capillaire 21, permettant de recevoir une extrémité d'une pièce d'interface 40, en particulier une extrémité de la section de la pièce d'interface comprenant la portion capillaire 42, de sorte qu'une fois la pièce d'interface assemblée au caloduc rigide, la gaine 23 entoure une section d'extrémité de la pièce d'interface.

Par ailleurs, la gaine 31 flexible de la portion flexible est également plus longue que les tuyaux flexibles 32 situés à l'intérieur de manière à pouvoir recevoir une extrémité d'une portion d'interface, en particulier l'extrémité de la pièce d'interface comprenant le canal interne 41, de sorte qu'une fois la pièce d'interface assemblée à la portion flexible, la gaine 31 entoure une section d'extrémité de la pièce d'interface.

En référence à la figure 4, le dispositif 1 comprend en outre une pièce de serrage 60 serrant la gaine 23 d'un caloduc rigide respectif et la gaine 31 flexible de la portion flexible à une pièce d'interface 40 respective. Cette pièce de serrage 60 peut par exemple être un manchon venant enserrer la pièce d'interface 40 et les extrémités des deux gaines 23, 31 s'étendant autour de la pièce d'interface. Dans des modes de réalisation, le manchon 60 est un manchon à mémoire de forme thermo-rétractable, qui se resserre par exposition au froid ou à la chaleur, selon la conception du manchon.

Dans des modes de réalisation, chaque pièce d'interface peut en outre comprendre une collerette 44 de calage (fig. 4) s'étendant sur la surface externe de la pièce 40, cette collerette 44 formant une butée pour la gaine 23 du caloduc rigide, et étant au moins partiellement recouverte par la gaine 31 flexible de la portion flexible 30. Dans un mode de réalisation, chaque pièce d'interface 40 comprend sur sa surface externe une rainure circonférentielle 45 et la collerette 44 est formée de deux pièces en C pouvant être insérées dans la rainure 45.

En référence aux figures 5a à 5c, on va maintenant décrire un exemple de procédé d'assemblage du dispositif 1 de transfert de chaleur décrit ci-avant.

Le procédé comprend une première étape 100 d'assemblage d'une portion flexible 30 à chaque pièce d'interface 40. Dans des modes de réalisation, cette étape comprend, en référence à la figure 5a, pour chaque pièce d'interface, l'assemblage d'une tige 50 par vissage de l'extrémité filetée à la pièce d'interface 40 et, en référence à la figure 5b, l'insertion de l'autre extrémité dans l'extrémité d'un tuyau flexible 32, puis l'insertion de l'ensemble dans la gaine 31 flexible de la portion flexible, de sorte que le ou les tuyaux flexibles 32 soient intégralement contenus dans la gaine et que la gaine recouvre également une partie d'extrémité de chaque pièce d'interface 40.

Le procédé comprend également, en référence à la figure 5c une étape 200 d'assemblage de chaque pièce d'interface 40 à un caloduc rigide respective, par insertion au moins partielle de la portion capillaire 42 de chaque pièce d'interface dans la gaine 23 du caloduc rigide. Avant cette étape, le procédé peut également comprendre le positionnement d'une collerette 44 sur la surface externe de chaque pièce d'interface pour former une butée pour la gaine 23.

Dans des modes de réalisation, le procédé comprend également, en référence à la figure 5d, une étape 300 de serrage de l'assemblage de chaque pièce d'interface 40 avec la portion flexible et chaque caloduc rigide. Ce serrage est avantageusement réalisé au moyen du manchon 60 thermo-rétractable, qui peut être positionné autour d'un caloduc rigide 20 puis coulissé jusqu'à être superposé à une pièce d'interface 40 avant d'être rétracté thermiquement pour venir serrer ensemble les extrémités des deux gaines 23, 31 et la pièce d'interface 40.

En variante, le serrage 300 par un manchon peut être remplacé par un assemblage définitif de chaque pièce d'interface à la portion flexible et un caloduc rigide par exemple par soudure ou brasure.

Dans un mode de réalisation, dans le cas où le serrage est réalisé par un manchon thermo-rétractable, chaque manchon peut être positionné préalablement à l'étape 200, c'est-à-dire après l'assemblage du collier formant collerette 44 à l'interface puis l'assemblage des tiges 50 à la pièce d'interface 40, puis l'assemblage 100 de la portion flexible 30 à la pièce d'interface. La portion capillaire 42 de chaque pièce d'interface peut ensuite être insérée dans la gaine 23 du caloduc rigide respectif, avant que le manchon ne se rétracte pour réaliser le serrage de l'assemblage de la pièce d'interface 40 avec d'une part la portion flexible 30 et d'autre part le caloduc rigide 20.

Le dispositif 1 diphasique de transfert de chaleur décrit ci-avant présente un caractère flexible conféré par la portion flexible. En ajustant la longueur de cette portion compte-tenu du rayon de courbure permis par la gaine 31, des angles de flexion importants peuvent être obtenus, jusque 90° voire 180°. De plus, le dispositif 1 est robuste grâce aux connexions entre les différentes pièces, ce qui garantit un échange thermique efficace et fonctionnel même avec un angle de flexion important.

Ce dispositif peut avantageusement, être utilisé dans un engin spatial comprenant des appendices déployables, où un caloduc rigide 20 est montée sur un appendice déployable et un autre caloduc rigide 20 est montée sur le corps de l'engin spatial.

Dans une autre application, ce dispositif peut être utilisé pour assurer un lien thermique entre un instrument monté sur le corps d'un engin spatial par l'intermédiaire d'une plate-forme isostatique, par exemple un capteur ou un instrument d'observation, et le corps d'un engin spatial, afin de refroidir l'instrument sans lui transmettre de contraintes mécaniques ou de vibrations susceptibles de perturber son réglage.

Ce dispositif peut également être utilisé pour assurer un échange thermique entre deux parois formant un angle entre elles, par exemple deux parois à 90°C ; la souplesse conférée par la portion flexible permet de réduire les contraintes de précision sur l'alignement des parois et donc de simplifier l'assemblage.

Liste des références numériques :
- 1 : Dispositif de transfert thermique
- 10 : Cavité interne
- 20 : caloduc rigide
- 21 : milieu capillaire
- 22 : rainure de circulation de vapeur
- 23 : gaine
- 30 : portion flexible
- 31 : gaine flexible
- 32 : conduit interne de circulation de liquide
- 33 : espace de circulation de vapeur
- 40 : pièce d'interface
- 41 : canal de circulation de liquide
- 411 : épaulement
- 42 : portion capillaire
- 43 : conduit interne de circulation de vapeur
- 44 : collerette
- 45 : rainure circonférentielle
- 50 : tige creuse
- 51 : extrémité filetée
- 52 deuxième extrémité
- 60 : manchon
- 100 : assemblage d'une portion flexible à une pièce d'interface
- 200 : assemblage d'une pièce d'interface à un caloduc rigide
- 300 : serrage

## Revendications

1. Dispositif (1) diphasique de transfert de chaleur apte à fonctionner en environnement spatial, adapté pour relier entre elles deux portions d'échange thermique respectivement de vaporisation et de condensation, le dispositif de transfert de chaleur comprenant :
- un circuit de vapeur d'une part et par un circuit de liquide d'autre part,
- deux caloducs rigides (20), comprenant chacun un milieu capillaire (21) faisant partie du circuit de liquide, et au moins une rainure (22) de circulation de vapeur faisant partie du circuit de vapeur,
- au moins une portion flexible (30) et deux pièces d'interface (40), les deux caloducs rigides (20) étant reliés entre eux successivement par une des pièces d'interface (40), la portion flexible (30) et l'autre pièce d'interface (40),
dans lequel la portion flexible (30) comprend une gaine flexible (31) étanche à l'intérieur de laquelle s'étend au moins un conduit interne flexible de circulation de liquide (32), entouré d'un espace pour la circulation de vapeur (33), **caractérise en ce que**
ledit conduit interne flexible de circulation de liquide (32) est étanche et souple, chaque pièce d'interface (40) comprenant au moins un canal (41) de circulation de liquide en communication de liquide avec ledit conduit interne flexible (32) d'une part et se prolongeant par une portion annulaire (42) d'autre part, cette portion annulaire (42) présentant une capillarité déterminée et venant en butée contre le milieu capillaire (21) formant le circuit liquide d'un caloduc rigide (20).

2. Dispositif (1) selon la revendication 1, comprenant en outre au moins une tige creuse (50) présentant une première extrémité filetée (51) venant se visser en butée en vis-à-vis du canal de circulation de liquide (41) de chaque pièce d'interface (40) et une autre extrémité (52) emmanchée dans ledit conduit interne flexible (32).

3. Dispositif (1) selon l'une des revendications précédentes, dans lequel ledit conduit interne flexible de circulation de liquide (32) entouré d'un espace pour la circulation de vapeur (33) est libre par rapport à la gaine flexible.

4. Dispositif (1) selon l'une des revendications précédentes, dans lequel le diamètre capillaire du milieu capillaire de chaque caloduc rigide est inférieur au diamètre capillaire de la portion annulaire (42) de chaque pièce d'interface (40), lui-même inférieur au diamètre du conduit interne flexible (32) de circulation de liquide.

5. Dispositif (1) selon l'une des revendications précédentes, dans lequel chaque pièce d'interface (40) est réalisée en aluminium ou alliage d'aluminium, de même que les caloducs rigides (20) sont réalisées en aluminium ou alliage d'aluminium ou en acier inoxydable.

6. Dispositif (1) selon la revendication précédente, dans lequel chaque pièce d'interface (40) est une pièce métallique monobloc fabriquée par fabrication additive.

7. Dispositif (1) selon l'une des revendications précédentes, dans lequel chaque caloduc rigide (20) comprend une première gaine (23) prolongée sur une partie d'une des pièces d'interface (40), et la gaine (31) de la portion flexible (30) se prolongeant sur une partie de cette pièce d'interface (40), les première et deuxième gaines (23, 31) étant serrées par une pièce de serrage (60) contre cette pièce d'interface (40).

8. Dispositif (1) selon la revendication précédente dans lequel la première gaine (23) vient en butée contre une collerette (44) de la pièce d'interface (40), la deuxième gaine (31) venant partiellement recouvrir cette collerette.

9. Procédé d'assemblage d'un dispositif (1) selon l'une des revendications précédentes, comprenant :
- un assemblage (100) d'une portion flexible (30) à une pièce d'interface (40), puis
- un assemblage (200) de la pièce d'interface (40) à un caloduc rigide (20), et
- un serrage (300) de l'assemblage de la pièce d'interface (40) avec la portion flexible (30) et le caloduc rigide (20), le serrage (300) étant réalisé par un manchon (60) thermo-rétractable préalablement glissé autour du caloduc rigide (20) puis coulissé autour de la pièce d'interface (40).

## Patentansprüche

1. Zweiphasige Wärmeübertragungsvorrichtung (1), die in einer Weltraumumgebung betrieben werden kann und dazu geeignet ist, zwei Wärmeaustauschabschnitte, nämlich einen Verdampfungs- und einen Kondensationsabschnitt, miteinander zu verbinden, wobei die Wärmeübertragungsvorrichtung umfasst:
- einen Dampfkreislauf einerseits und einen Flüssigkeitskreislauf andererseits,
- zwei starre Wärmeleitrohre (20), die jeweils ein Kapillarmedium (21) umfassen, das Teil des Flüssigkeitskreislaufs ist, und wenigstens eine Dampfzirkulationsnut (22), die Teil des Dampfkreislaufs ist,
- wenigstens einen flexiblen Abschnitt (30) und zwei Schnittstellenteile (40), wobei die beiden starren Wärmeleitrohre (20) nacheinander durch eines der Schnittstellenteile (40), nämlich den flexiblen Abschnitt (30) und das andere Schnittstellenteil (40), miteinander verbunden sind, wobei der flexible Abschnitt (30) eine flexible, dichte Hülle (31) umfasst, in deren Inneren sich wenigstens eine flexible innere Flüssigkeitszirkulationsleitung (32) erstreckt, die von einem Raum für die Dampfzirkulation (33) umgeben ist, **dadurch gekennzeichnet, dass** die flexible innere Flüssigkeitszirkulationsleitung (32) dicht und biegsam ist, wobei jedes Schnittstellenteil (40) wenigstens einen Flüssigkeitskanal (41) umfasst, der einerseits mit der flexiblen inneren Leitung (32) in Flüssigkeitsverbindung steht und sich andererseits durch einen ringförmigen Abschnitt (42) fortsetzt, wobei dieser ringförmige Abschnitt (42) eine bestimmte Kapillarität aufweist und an dem Kapillarmittel (21) anliegt, das den Flüssigkeitskreislauf eines starren Wärmeleitrohrs (20) bildet.

2. Vorrichtung (1) nach Anspruch 1, welche ferner wenigstens einen Hohlschaft (50) umfasst, der ein erstes Gewindeende (51) aufweist, das gegenüber dem Flüssigkeitszirkulationskanal (41) jedes Schnittstellenteils (40) in Anlage anschraubbar ist, und ein anderes Ende (52), das in die flexible innere Leitung (32) eingesteckt ist.

3. Vorrichtung (1) nach einem der vorhergehenden Ansprüche, wobei die flexible innere Flüssigkeitsleitung (32), die von einem Raum für die Dampfzirkulation (33) umgeben ist, in Bezug auf die flexible Hülle frei ist.

4. Vorrichtung (1) nach einem der vorhergehenden Ansprüche, wobei der Kapillardurchmesser des Kapillarmittels jedes starren Wärmerohrs kleiner ist als der Kapillardurchmesser des ringförmigen Abschnitts (42) jedes Schnittstellenteils (40), der wiederum kleiner ist als der Durchmesser der flexiblen inneren Flüssigkeitszirkulationsleitung (32).

5. Vorrichtung (1) nach einem der vorhergehenden Ansprüche, wobei jedes Schnittstellenteil (40) aus Aluminium oder einer Aluminiumlegierung hergestellt ist, ebenso wie die starren Wärmeleitrohre (20) aus Aluminium oder einer Aluminiumlegierung oder aus rostfreiem Stahl hergestellt sind.

6. Vorrichtung (1) nach dem vorhergehenden Anspruch, wobei jedes Schnittstellenteil (40) ein einteiliges Metallteil ist, das durch additive Fertigung hergestellt ist.

7. Vorrichtung (1) nach einem der vorhergehenden Ansprüche, wobei jedes starre Wärmeleitrohr (20) eine erste Hülle (23) umfasst, die sich über einen Teil eines der Schnittstellenteile (40) erstreckt, wobei sich die Hülle (31) des flexiblen Abschnitts (30) über einen Teil dieses Schnittstellenteils (40) erstreckt, wobei die erste und die zweite Hülle (23, 31) durch ein Klemmteil (60) gegen dieses Schnittstellenteil (40) geklemmt sind.

8. Vorrichtung (1) nach dem vorhergehenden Anspruch, wobei die erste Hülle (23) an einem Flansch (44) des Schnittstellenteils (40) anliegt, wobei die zweite Hülle (31) diesen Flansch teilweise überdeckt.

9. Verfahren zum Zusammenbau einer Vorrichtung (1) nach einem der vorhergehenden Ansprüche, umfassend:
- eine Montage (100) eines flexiblen Abschnitts (30) mit einem Schnittstellenteil (40), dann
- eine Montage (200) des Schnittstellenteils (40) an einem starren Wärmeleitrohr (20) und
- ein Festziehen (300) der Baugruppe des Schnittstellenteils (40) mit dem flexiblen Abschnitt (30) und dem starren Wärmeleitrohr (20), wobei das Festziehen (300) durch eine wärmeschrumpfbare Hülle (60) erfolgt, die zuvor um das starre Wärmeleitrohr (20) geschoben und dann um das Schnittstellenteil (40) geschoben wird.

## Claims

1. A two-phase heat transfer device (1) capable of operating in a space environment, adapted to connect together two respectively vaporisation and condensation heat exchange portions, the heat transfer device comprising:
- a vapour circuit on the one hand and a liquid circuit on the other hand,
- two rigid heat pipes (20), each comprising a capillary medium (21) forming part of the liquid circuit, and at least one vapour circulation groove (22) forming part of the vapour circuit,
- at least one flexible portion (30) and two interface parts (40), the two rigid heat pipes (20) being connected together successively by one of the interface parts (40), the flexible portion (30) and the other interface part (40),
wherein the flexible portion (30) comprises a sealed flexible sheath (31) inside which at least one liquid circulation flexible inner conduit (32) extends, surrounded by a vapour circulation space (33), **characterised in that** said liquid circulation flexible inner conduit (32) is sealed and flexible, each interface part (40) comprising at least one liquid circulation channel (41) in liquid communication with said flexible inner conduit (32) on the one hand and extending to an annular portion (42) on the other hand, this annular portion (42) having a determined capillarity and abutting against the capillary medium (21) forming the liquid circuit of a rigid heat pipe (20).

2. The device (1) according to claim 1, further comprising at least one hollow rod (50) having a first threaded end (51) screwed abutting against the liquid circulation channel (41) of each interface part (40) and another end (52) sleeved into said flexible inner conduit (32).

3. The device (1) according to any one of the preceding claims, wherein said liquid circulation flexible inner conduit (32) surrounded by a vapour circulation space (33) is free relative to the flexible sheath.

4. The device (1) according to one of the preceding claims, wherein the capillary diameter of the capillary medium of each rigid heat pipe is less than the capillary diameter of the annular portion (42) of each interface part (40), itself less than the diameter of the liquid circulation flexible inner conduit (32).

5. The device (1) according to one of the preceding claims, wherein each interface part (40) is made of aluminium or aluminium alloy, similarly the rigid heat pipes (20) are made of aluminium or aluminium alloy or stainless steel.

6. The device (1) according to the preceding claim, wherein each interface part (40) is a one-piece metal part manufactured by additive manufacturing.

7. The device (1) according to one of the preceding claims, wherein each rigid heat pipe (20) comprises a first sheath (23) extending over a part of one of the interface parts (40), and the sheath (31) of the flexible portion (30) extending over part of this interface part (40), the first and second sheaths (23, 31) being clamped by a clamping part (60) against this interface part (40).

8. The device (1) according to the preceding claim, wherein the first sheath (23) abuts against a flange (44) of the interface part (40), the second sheath (31) partially covering this flange.

9. A method for assembling a device (1) according to any one of the preceding claims, comprising:
- assembling (100) a flexible portion (30) to an interface part (40), and then
- assembling (200) the interface part (40) to a rigid heat pipe (20), and
- clamping (300) the assembly of the interface part (40) with the flexible portion (30) and the rigid heat pipe (20), clamping (300) being carried out by a heat-shrinkable sleeve (60) previously slid around the rigid heat pipe (20) and then slid around the interface part (40).
